# EUROPÄISCHE PATENTSCHRIFT

(11) **EP 0 563 857 B1**
(45) Veröffentlichungstag und Bekanntmachung des Hinweises auf die Patenterteilung: **22.11.1995**
(21) Anmeldenummer: 93105181.7
(22) Anmeldetag: 29.03.1993
(51) Int. Cl.: B60K 7/00, B62B 3/06, B62D 51/00

(54) **Fahrzeug mit einer Antriebs-Einheit und daran angeschlossenen Leitungen**
Vehicle with drive unit and cables fixed thereon
Véhicule avec unité de propulsion et des câbles fixés

(30) Priorität: 02.04.1992 DE 4211028
(43) Veröffentlichungstag der Anmeldung: 06.10.1993
(73) Patentinhaber: Linde Aktiengesellschaft, 65189 Wiesbaden (DE)
(72) Erfinder: Cartier, Guy, F-86200 Loudun (FR); Briday, Yves, F-86130 Jaunay Clan (FR); Bonnet, Thierry, F-86130 Jaunay Clan (FR)
(74) Vertreter: Schaefer, Gerhard, Dr.

(56) Entgegenhaltungen:
- EP-A- 0 417 326
- US-A- 3 380 546

## Beschreibung

Die Erfindung betrifft ein Fahrzeug, insbesondere Flurförderzeug, mit einer Antriebseinheit, die einen zusammen mit einem Antriebsrad um eine Vertikalachse schwenkbaren Motor aufweist, an den Energieversorgungsleitungen und/oder Steuerleitungen angeschlossen sind, wobei oberhalb der Antriebseinheit eine die Leitungen aufnehmende Buchse angeordnet ist, welche um ihre Mittelachse drehbar ist, wobei in Vertikalstellung der Buchse die Mittelachse deckungsgleich mit der Vertikalachse ist.

Derartige Fahrzeuge, bei denen das auf der Fahrbahn abrollende Antriebsrad und die Antriebseinheit einen gemeinsam schwenkbaren Block bilden, werden beispielsweise als Niederhubwagen, Hochhubwagen, Kommissionierer und Schubmaststapler in Geh-, Sitz- und Standausführung verwendet. Ein gattungsgemäßer Transportwagen wird z.B. in der US-A 3 380 546 beschrieben. Bei solchen Fahrzeugen müssen die zu dem Motor der Antriebseinheit führenden Leitungen so verlegt sein, daß einerseits das Antriebsrad und damit die Antriebseinheit ungehindert geschwenkt werden kann und andererseits die Leitungen mechanisch gering belastet sind, um Dauerfestigkeitsprobleme zu vermeiden. Diese Problematik gilt sowohl für elektrische als auch für hydraulische Leitungen.

Der vorliegenden Erfindung liegt die Aufgabe zugrunde, ein Fahrzeug der eingangs genannten Art zur Verfügung zu stellen, das eine günstige Anordnung der zu dem Motor führenden Leitungen aufweist.

Diese Aufgabe wird erfindungsgemäß dadurch gelöst, daß die Buchse konzentrisch in einer drehfesten Führungshülse gelagert ist, die eine zumindest einfach-kardanische Aufhängung aufweist, wobei die Kardanachse die Vertikalachse schneidet. Unabhängig davon, wo sich der Motor an der Antriebseinheit befindet, beispielsweise direkt am Antriebsrad angeflanscht, werden die Leitungen zu der oberhalb der Antriebseinheit auf der Vertikalachse angeordneten Buchse geführt und dort in Postion gehalten, wobei durch die Drehbarkeit der Buchse die Leitungen beim Schwenken der Antriebseinheit mitdrehen und somit in diesem Bereich nicht auf Torsion belastet werden. Die Buchse ist infolge der einfach-kardanischen Aufhängung außerdem in bezug auf die Vertikalachse winkelbeweglich, wodurch die Leitungen in einem weniger engen Bogen vom Motor zur Buchse geführt sind und Zwängungen vermieden werden.

Bei einem Fahrzeug, das als Gabelhubwagen mit einem Antriebsteil und einem damit gelenkig verbundenen, anhebbaren Lastteil ausgebildet ist, erweist es sich als zweckmäßig, wenn die Kardanachse mit einer quer zur Fahrzeuglängsachse angeordneten Gelenkachse zusammenfällt, die im Schnittpunkt eines mit dem Antriebsteil ortsfest verbundenen Auslegers und eines mit dem Lastteil verbundenen, beweglichen Gelenkhebels liegt. Auf diese Weise wird die erfindungsgemäße Anordnung zur Führung der Leitungen in die zum Anheben des Lastteils notwendige Anordnung integriert, so daß es nur eines geringen Aufwands zur Realisierung der Erfindung bedarf.

Es ist zu diesem Zweck eine solche Anordnung günstig, bei der der Ausleger im Bereich der Gelenkachse zwei voneinander beabstandete parallele Arme aufweist. Der Gelenkhebel ist im Bereich der Gelenkachse gegabelt, wobei die Arme mit den Gabelhälften verbunden sind und dazwischen die Führungshülse angeordnet ist. Die kardanische Aufhängung der Führungshülse bewirkt dabei, daß die Buchse hinsichtlich ihrer Einstellung von der Hebelkinematik entkoppelt ist.

Eine besonders vorteilhafte Ausgestaltung der Erfindung sieht vor, daß zur Verbindung der Arme mit den Gabelhälften jeweils eine Schraube und eine Schraubenmutter vorgesehen ist, wobei die Schraubenmutter am Außenumfang eine Zylindermantelfläche aufweist, die in einer Bohrung der Gabelhälfte angeordnet ist, und wobei an der Stirnseite der Schraubenmutter ein Kegel angeformt ist, der zum Eingriff mit einer Vertiefung an der Außenumfangsfläche der Führungshülse vorgesehen ist. Die kardanische Aufhängung der Führungshülse benötigt daher keine zusätzlichen Teile.

Erfindungsgemäß ist darüber hinaus vorgesehen, daß das Fahrzeug als Deichsel-Hubwagen mit einem an die Antriebseinheit angeschlossenen Elektromotor ausgebildet ist.

Weitere Vorteile und Einzelheiten der Erfindung werden anhand eines in den Figuren schematisch dargestellten Ausführungsbeispieles näher erläutert. Dabei zeigt:
- Figur 1: eine Seitenansicht eines Elektro-Deichsel-Hubwagens;
- Figur 2: eine vergrößerte Seitenansicht des Antriebsteils des Elektro-Deichsel-Hubwagens nach Figur 1;
- Figur 3: eine Teilansicht der deichselseitigen Stirnseite des Antriebsteils;
- Figur 4: eine Draufsicht auf die Anordnung zur Führung der Leitungen im Teilschnitt;
- Figur 5: einen Schnitt gemäß der Linie V-V in Figur 4.

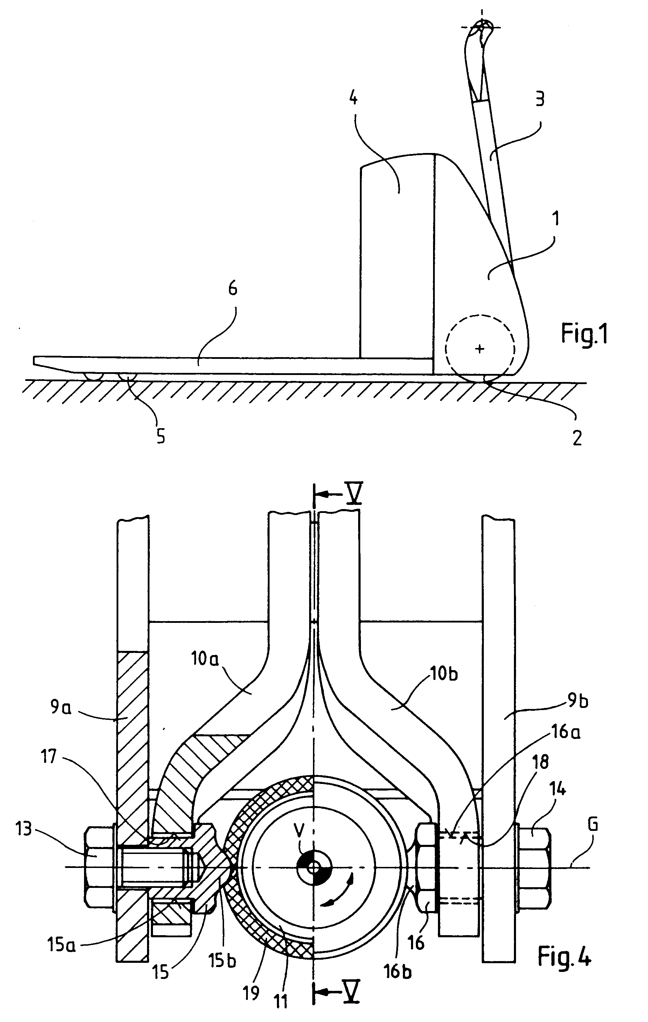

Figur 1 zeigt ein in diesem Ausführungsbeispiel als Elektro-Deichsel-Hubwagen ausgebildetes Fahrzeug, das ein Antriebsteil 1 mit einem Antriebsrad 2 und einer Deichsel 3 aufweist sowie ein gelenkig mit dem Antriebsteil 1 verbundenes Lastteil 4 mit auf Lastrollen 5 abgestützten Lastgabeln 6.

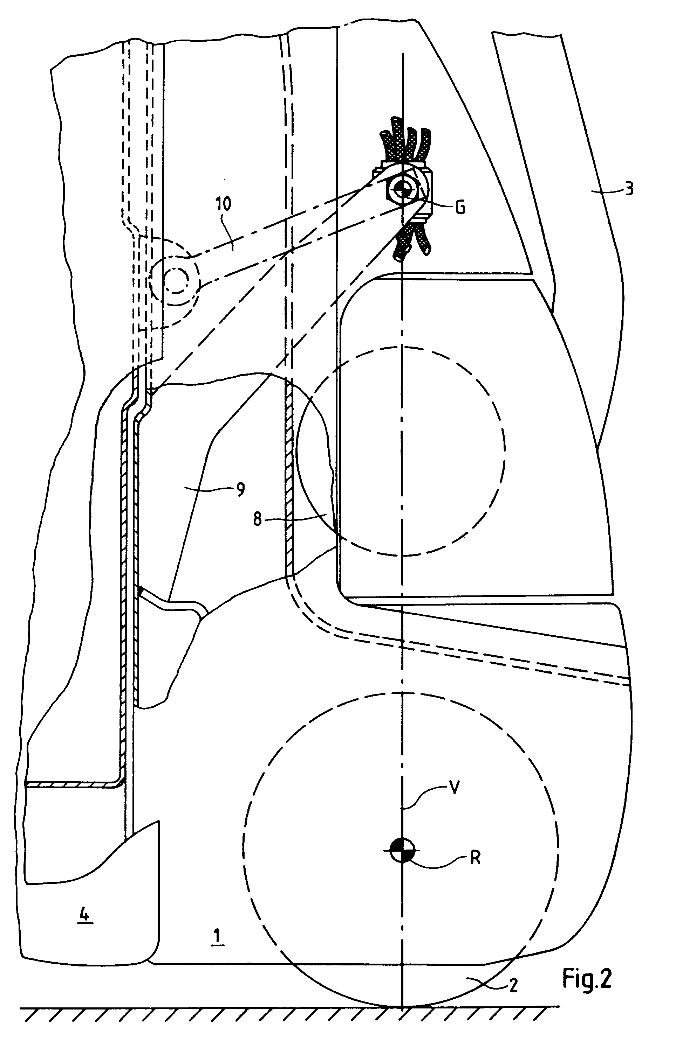

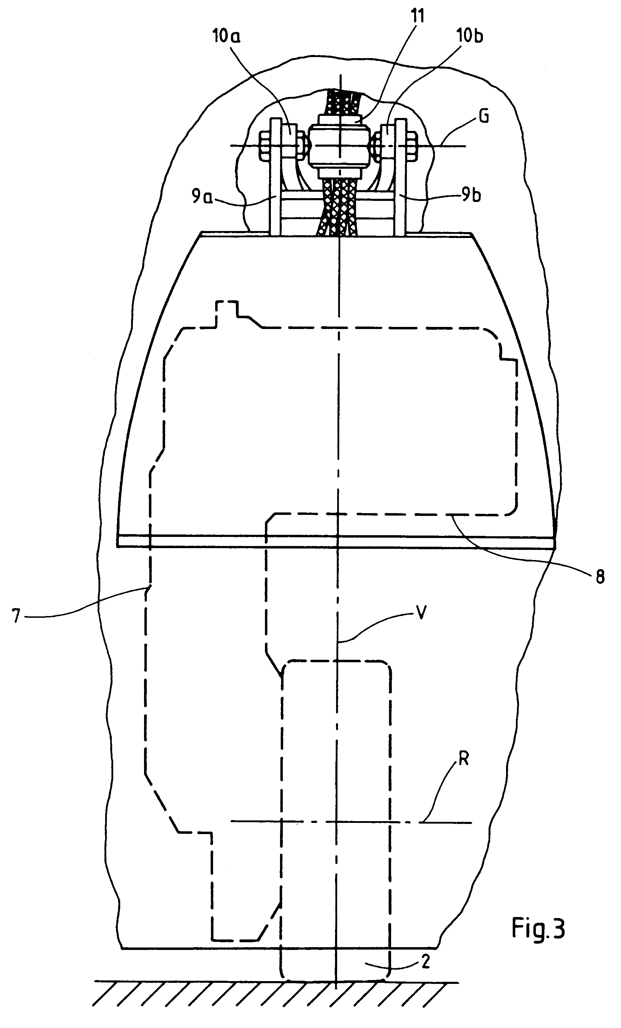

Aus den in Figur 2 und 3 dargestellten Ansichten des Antriebsteils 1 des Elektro-Deichsel-Hubwagens ist die Anordnung eines mit einer Antriebseinheit 7 verblockten Elektromotors 8 erkennbar, der sich oberhalb des Antriebsrads 2 befindet und dessen Welle parallel zur Rotationsachse R des Antriebsrads 2 ist. Die Antriebseinheit 7 ist samt Antriebsrad 2 und Elektromotor 8 mittels der Deichsel 3 um eine Vertikalachse V schwenkbar, die die Rotationsachse R des Antriebsrads 2 in dessen axialer Mitte schneidet (Figur 2). Die Vertikalachse V trifft also in der Aufstandsfläche des Antriebsrads 2 auf die Fahrbahn auf.

Mit dem Antriebsteil 1 ist ein Ausleger 9 ortsfest verbunden (z. B. geschweißt), der sich bis oberhalb des Elektromotors 8 in den Bereich der Vertikalachse V erstreckt und aus zwei voneinander parallel beabstandeten Armen 9a und 9b besteht. An jedem Arm 9a bzw. 9b ist jeweils eine Gabelhälfte 10a bzw. 10b eines Gelenkhebels 10 (in Figur 2 strichpunktiert dargestellt) befestigt, dessen eines Ende gelenkig mit dem Lastteil 4 verbunden und dessen anderes Ende zwecks gelenkiger Verbindung mit dem Ausleger 9 gegabelt ist. Der Gelenkhebel 10 und der Ausleger 9 sind Teile einer Hebelkinematik, die ein Gelenkparallelogramm bildet und mit deren Hilfe der Lastteil 4 gegenüber dem Antriebsteil 1 angehoben werden kann.

Die sich im Schnittpunkt des Auslegers 9 mit dem Gelenkhebel 10 ergebende und quer zur Fahrzeuglängsachse angeordnete Gelenkachse G schneidet die Vertikalachse V. Zwischen den Gabelhälften 10a und 10b ist eine Buchse 11 angeordnet, deren Mittelachse in vertikaler Stellung der Buchse 11 deckungsgleich ist mit der Vertikalachse V und in der an den Elektromotor 8 angeschlossene elektrische Leitungen 12 geführt sind.

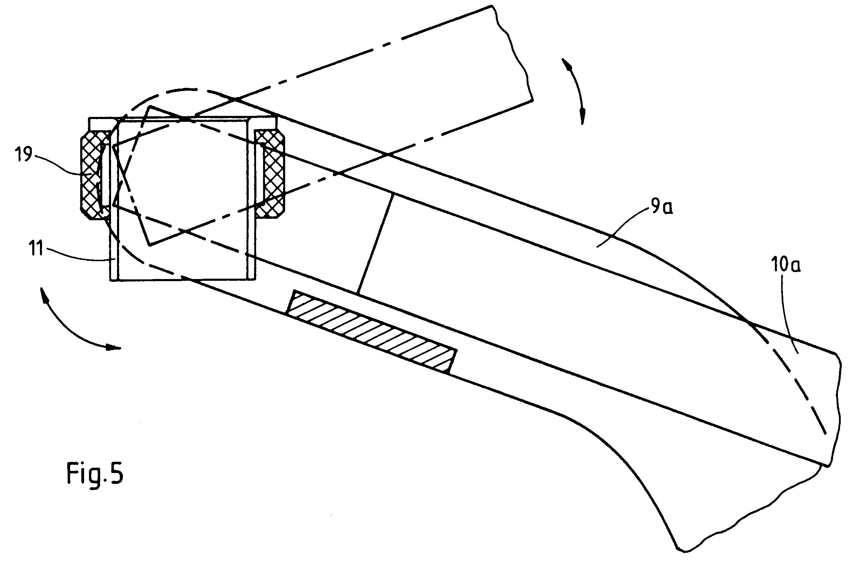

Die Anordnung zur Führung der Leitungen 12 ist in den Figuren 4 und 5 vergrößert dargestellt. Jeder Arm 9a bzw. 9b ist mittels einer Schraube 13 bzw. 14 und einer Schraubenmutter 15 bzw. 16 mit einer Gabelhälfte 10a bzw. 10b verschraubt. Die Schraubenmutter 15 bzw. 16 weist jeweils eine Zylindermantelfläche 15a bzw. 16a auf, die in einer Bohrung 17 bzw. 18 der Gabelhälfte 10a bzw. 10b angeordnet ist, so daß der Gelenkhebel 10 um die Gelenkachse G gedreht werden kann.

Die Buchse 11 ist in einer Führungshülse 19 drehbar gelagert, die mit einer einfach-kardanischen Aufhängung versehen ist. Zu diesem Zweck ist jeweils an der Stirnseite der Schraubenmuttern 15 bzw. 16 ein Kegel 15b bzw. 16b angeformt, der mit einer Vertiefung an der Außenumfangsfläche der Führungshülse 19 in Eingriff steht. Die Kardanachse entspricht der Gelenkachse G.

## Patentansprüche

1. Fahrzeug, insbesondere Flurförderzeug, mit einer Antriebseinheit, die einen zusammen mit einem Antriebsrad um eine Vertikalachse schwenkbaren Motor aufweist, an den Energieversorgungsleitungen und/oder Steuerleitungen angeschlossen sind, wobei oberhalb der Antriebseinheit (7) eine die Leitungen (12) aufnehmende Buchse (11) angeordnet ist, welche um ihre Mittelachse drehbar ist, wobei in Vertikalstellung der Buchse die Mittelachse deckungsgleich mit der Vertikalachse (V) ist,
**dadurch gekennzeichnet**, daß die Buchse (11) konzentrisch in einer drehfesten Führungshülse (19) gelagert ist, die eine zumindest einfach-kardanische Aufhängung aufweist, wobei die Kardanachse die Vertikalachse (V) schneidet.

2. Fahrzeug nach Anspruch 1, wobei das Fahrzeug als Gabel-Hubwagen mit einem Antriebsteil (1) und einem damit gelenkig verbundenen, anhebbaren Lastteil (4) ausgebildet ist, dadurch gekennzeichnet, daß die Kardanachse mit einer quer zur Fahrzeuglängsachse angeordneten Gelenkachse (G) zusammenfällt, die im Schnittpunkt eines mit dem Antriebsteil (1) ortsfest verbundenen Auslegers (9) und eines mit dem Lastteil (4) verbundenen, beweglichen Gelenkhebels (10) liegt.

3. Fahrzeug nach Anspruch 2, dadurch gekennzeichnet, daß im Bereich der Gelenkachse (G) der Ausleger (9) zwei voneinander beabstandete parallele Arme (9a,9b) aufweist und der Gelenkhebel (10) gegabelt ist, wobei die Arme (9a,9b) mit den Gabelhälften (10a,10b) verbunden sind und dazwischen die Führungshülse (19) angeordnet ist.

4. Fahrzeug nach Anspruch 3, dadurch gekennzeichnet, daß zur Verbindung der Arme (9a,9b) mit den Gabelhälften (10a,10b) jeweils eine Schraube (13,14) und eine Schraubenmutter (15,16) vorgesehen ist, wobei die Schraubenmutter (15,16) am Außenumfang eine Zylindermantelfläche (15a,16a) aufweist, die in einer Bohrung (17,18) der Gabelhälfte (10a,10b) angeordnet ist, und wobei an der Stirnseite der Schraubenmutter (15,16) ein Kegel (15b,16b) angeformt ist, der zum Eingriff mit einer Vertiefung an der Außenumfangsfläche der Führungshülse (19) vorgesehen ist.

5. Fahrzeug nach einem der vorangegangenen Ansprüche, dadurch gekennzeichnet, daß das Fahrzeug als Deichsel-Hubwagen mit einem an die Antriebseinheit (7) angeschlossenen Elektromotor (8) ausgebildet ist.

## Claims

1. Vehicle, in particular industrial truck, with a driving unit which exhibits a motor which is pivotable together with a driving wheel about a vertical axis and to which power supply lines and/or control lines are connected, a bush (11) receiving the lines (12) being disposed above the driving unit (7) and being pivotable about its central axis, the central axis being in alignment with the vertical axis (V) in the vertical position of the bush,
characterised in that the bush (11) is mounted concentrically in a torsionally fixed guide sleeve (19) which exhibits an at least single-cardan mounting, the cardan axis intersecting the vertical axis (V).

2. Vehicle according to claim 1, the vehicle being embodied as a fork-lift truck with a driving part (1) and a lifting load part (4) articulated thereto, characterised in that the cardan axis coincides with an articulation axis (G) which is disposed at right angles to the longitudinal axis of the vehicle and lies at the point of intersection of a beam (9) connected to the driving part (1) in a fixed position and a moving articulated lever (10) connected to the load part (4).

3. Vehicle according to claim 2, characterised in that in the area of the articulation axis (G) the beam (9) exhibits two spaced parallel arms (9a, 9b) and the articulated lever (10) is forked, the arms (9a, 9b) being connected to the fork halves (10a, 10b) with the guide sleeve (19) disposed between them.

4. Vehicle according to claim 3, characterised in that in each case a bolt (13, 14) and a threaded nut (15, 16) is provided to connect the arms (9a, 9b) to the fork halves (10a, 10b), the threaded nut (15, 16) exhibiting on its outer circumference a cylindrical surface (15a, 16a) which is disposed in a bore (17, 18) of the fork half (10a, 10b), and a taper (15b, 16b) which is provided for engagement with a recess on the external circumferential surface of the guide sleeve (19) being formed on the front end of the threaded nut (15, 16).

5. Vehicle according to one of the preceding claims, characterised in that the vehicle is embodied as a tiller-controlled lift truck with an electric motor (8) connected to the driving unit (7).

## Revendications

1. Véhicule, notamment chariot élévateur, comportant un groupe d'entraînement, qui comporte un moteur pivotant autour d'un axe vertical avec une roue motrice, et auquel sont reliées les conduites d'alimentation en énergie et/ou des conduites de commande, et au-dessus du groupe d'entraînement (7) se trouve un manchon (11) pour recevoir les conduites(12), ce manchon pouvant tourner autour de son axe et en position verticale du manchon, l'axe du manchon coïncide avec l'axe vertical (V), caractérisé en ce que le manchon (11) est monté concentriquement à un manchon de guidage (19), solidaire en rotation, qui comporte au moins une suspension avec un cardan simple, l'axe du cardan coupant l'axe vertical (V).

2. Véhicule selon la revendication 1, réalisé sous la forme d'un chariot élévateur à fourche comprenant un groupe d'entraînement (1) auquel est relié de manière articulée une partie de réception de charge (4), relevable, caractérisé en ce que l'axe de cardan coïncide avec un axe d'articulation (G) transversal par rapport à l'axe longitudinal du véhicule, axe qui se situe à l'intersection d'un bras (9) relié de manière fixe au groupe d'entraînement (1) et d'un levier d'articulation (10) relié de manière mobile à la partie de réception de charge (4).

3. Véhicule selon la revendication 2, caractérisé en ce qu'au niveau de l'axe d'articulation (G), le bras (9) comporte deux bras (9a, 9b) parallèles, écartés l'un de l'autre et le levier articulé (10) est en forme de fourche, ces bras (9a, 9b) étant reliés aux moitiés de fourche (10a, 10b) entre lesquelles se trouve le manchon de guidage (19).

4. Véhicule selon la revendication 3, caractérisé en ce que pour relier les bras (9a, 9b) aux moitiés de fourche (10a, 10b) il est prévu chaque fois une vis (13, 14) et un écrou (15, 16), ce dernier (15, 16) ayant à la périphérie, une surface enveloppe cylindrique (15a, 16a) placée dans un perçage (17, 18) des moitiés de fourche (10a, 10b) et la face frontale de l'écrou (15, 16) est munie d'un cône (15b, 16b) prévu pour venir en prise avec une cavité de la surface périphérique extérieure du manchon de guidage (19).

5. Véhicule selon l'une des revendications précédentes, caractérisé en ce qu'il est réalisé en forme de chariot élévateur à timon équipé d'un moteur électrique (8) relié au groupe d'entraînement (7).
